# EUROPEAN PATENT SPECIFICATION

(11) **EP 4 057 792 B1**
(45) Date of publication and mention of the grant of the patent: **26.03.2025**
(21) Application number: 20804000.6
(22) Date of filing: 29.10.2020
(51) Int. Cl.: A01D 34/00, A01G 9/28

(54) **ROBOTIC LAWNMOWER FENCE**
ROBOTISCHER RASENMÄHERZAUN
CLÔTURE DE TONDEUSE À GAZON ROBOTISÉE

(30) Priority: 14.11.2019 SE 1951312
(43) Date of publication of application: 21.09.2022
(73) Proprietor: HUSQVARNA AB, 561 82 Huskvarna (SE)
(72) Inventor: ARVIDSSON, Mikael, 553 10 Jönköping (SE); LUNDGREN, Jonathan, London Greater London N1 2LT (GB)
(74) Representative: Meissner Bolte Nürnberg
(86) International application number: PCT/SE2020/051047
(87) International publication number: WO 2021/096408

(56) References cited:
- WO-A1-98/31899
- GB-A- 189 400 351
- GB-A- 189 804 314
- GB-A- 189 804 314
- US-A- 2 248 860

## Description

### Field of the invention

The present invention relates to a robotic lawnmower fence and more particularly to a physical robotic lawnmower fence.

### Background

A working area for a robotic lawnmower can be delimited by a boundary wire. This wire sends a signal that the robotic lawnmower detects when it is close to the boundary wire, and makes the robotic lawnmower turn around and not to enter the area outside the boundary wire and keeps the robotic lawnmower within a certain area. When the robotic lawnmower operates in the work area, it might encounter an obstacle, for example leg stands for trampolines, garden furniture etc. Sometimes the user would like to temporary limit a sub-area within the existing operating area where the robotic lawnmower shall not operate, for example, beds of planted flowers, zones of freshly sown grass, etc. One way to delimit the operating area of the robotic lawnmower is to modify or expand the boundary wire, but it is both costly and time consuming.

### Summary

It is an object of the present invention to solve, or at least mitigate, parts or all above mentioned problems. To this end, there is provided a fence for a robotic lawnmower comprising a bracket with two legs, which are essentially straight and parallel, and a crossbar, which extends between upper ends of the two legs and perpendicular to the legs, wherein opposite free ends of the legs are adapted to be anchored in the ground, and two support elements, each adapted to be arranged along a respective leg in the extension direction thereof to define a maximum depression depth of the legs into the ground.

Thanks to the predefined maximum depression depth, anchoring of the fence at a suitable impact height for the robotic lawnmower may be facilitated, that is in relation to free course from the ground and body height of the robotic lawnmower. When installed correctly the robotic lawnmower will collide at a bumper on the body part with the crossbar of the fence and turn in another direction away from the obstacle to be protected.

The bracket may be formed in a single piece. The bracket may substantially have the shape of a "U" that have been turned upside down. The free ends of the legs are adapted to be pressed into the ground with the support element acting as a stop to define the maximum depression depth of the legs into the ground. The two support elements provide the fence with a mechanical strength and anchoring depth to withstand a collision from a robotic lawnmower.

The fence can be intact after pulling up from the ground, leading to a very easy placement, disassembly, and assembly in the next location.

In one embodiment, the crossbar may be essentially straight. By being essentially straight, the entire crossbar may extend along a uniform collision height above the ground, which warrants a uniform collision behaviour regardless of collision position. Moreover, it may be enough stable to resist an impact of the robotic lawnmower without deformation. Since the crossbar is not provided with any protruding parts, the risk that the body part of the robotic lawnmower hooks into the crossbar at an impact may be reduced.

According to the invention, each support element comprises at least one aperture, wherein the free end of a leg of the bracket is adapted to be inserted through the aperture and wherein the support element can be moved along an extension direction of the leg. The aperture can extend through the entire support element in its longitudinal extension direction. The aperture may be arranged centrally in the support element or along at least one of the long side edges of the support element. The size of the aperture may big enough for a leg of the bracket to be inserted though the opening but small enough to provide some friction between the leg and the support element when the support element is moved along an extension direction of the leg between the free ends of the legs and the crossbar. The aperture may be a through hole.

In one embodiment, each leg of the bracket may be provided with at least one support element stop arrangement. The support element stop arrangement may be adapted to define an upper restriction of the movement of the support element along the leg. To facilitate defining a maximum depression depth of the legs into the ground, the bracket can be provided with a support element stop arrangement. The length of the free end of the legs defines the maximum depression depth and the length and position of the support element in the direction of the respective legs defines the length of the free ends. This support element stop arrangement can be integrated with or be an external part of the bracket. The support element stop arrangement may be a flattening that locally makes the bracket wider.

In one embodiment, the support element stop arrangement may comprise a bend of the bracket. The bend can be at the transition area between the upper end of each leg and the crossbar. The bend may also be arranged at an intermediate position along each leg. The bend may have the shape of a spiral.

In one embodiment, the length of the support elements in the direction of the respective legs may define the maximum depression depth of the legs into the ground. When the support element has been arranged on respective legs of the bracket, they are moved along the extension direction thereof towards the support element stop arrangement, which defines an upper restriction. The support elements can have the shape of e.g. a cone or a rectangle. The fence may be provided with two support elements of the same shape. Each support element has a length in the longitudinal direction. The upper end of each support element may rest against a stop element as defined above, and the lower end rests on the ground when the legs are depressed into the ground.

In one embodiment, the crossbar can be configured to extend at a height above the ground, when the fence is inserted straight into the ground to the maximum depression depth, of between 70 and 170 mm. The height of the crossbar above ground is preferably between 100 and 130 mm. This reduces the risk that a robotic lawnmower that hits the crossbar gets stuck between the crossbar and the ground or stuck in the crossbar. Instead, it hits the crossbar and turns around in another direction. A suitable part of the robotic lawnmower to hit the crossbar is a bumper arranged on the front side of the body part of the robotic lawnmower.

In one embodiment, the legs and the support elements may define a maximum depression depth of between 80 and 250 mm. The maximum depression depth is preferably between 140 to 180 mm. To keep the fence stable in the ground and able to resist an impact from the robotic lawnmower without being significant affected, it is preferable that the legs may be pressed into the ground to a certain depth. The length of each leg defines, together with the position of the respective support element, the possible maximum depression depth.

In one embodiment, the bracket may be of metal. It is preferred that the bracket is made of an enough durable material to resist an impact of a robotic lawnmower. Since the bracket will be placed outdoors it is also preferred that the bracket is made of a material, which is only slightly affected by different weather conditions.

In one embodiment, the bracket may be a steel wire with a thickness of between 3 and 9 mm, for example about 6 mm. Thereby, it will be strong enough to resist an impact of a robotic lawnmower but still at a reasonable cost, and reasonably easy to bend to the desired shape.

In one embodiment, the surface of the bracket can be treated with a powder coating. By providing the bracket with a suitable colour, the bracket can be perceived a discreet part of a garden.

The free ends of the legs of the bracket may be chamfered to define end tips. The bevelled angle can be of at least 45° compared to a straight end edge of the free ends. When the free ends are pressed into the ground, a chamfered end may facilitate penetration of the ground and less force must be applied compared to a straight end edge.

In one embodiment, each support element may be made of a plastic. This provides a lightweight support element that is easy and inexpensive to manufacture in large series. Preferably the plastic is a thermoplastic, for example, polypropylene. By choosing a thermoplastic, the support elements can easily be manufactured with different production methods.

Each support element may be made in a single piece. The support element may be provided through injection moulding of a thermoplastic. Each support element may be provided with a first side and a second side, facing in opposite directions. These first and second sides may be each other's mirror images, which facilitates the injection moulding and makes it possible to reduce the cost for providing a mould used for the injection moulding.

The support elements may have the shape of a rectangle that has a height of between 90 to 110 mm, a width of between 44 to 50 mm, and a thickness of between 10 to 14 mm. The support elements may also have the shape of a cone, which easily can be provided through injection moulding.

In one embodiment, the robotic lawnmower fence may be connectable to an adjacent, identical robotic lawnmower fence. The length of each fence, in a direction perpendicular to the insertion direction of the legs, may typically be between 300 and 400 mm. Such a length provides a good balance between ease of installation, flexibility of the shape of the fence installation, and ability to resist the impact from the robotic lawnmower and prevent the robotic lawnmower from getting stuck between the legs of the bracket. Making the fence connectable to an adjacent fence provides a possibility to delimit a large area within the working area for the robotic lawnmower, provides a symmetric and attractive appearance to the installation, reduces the risk of fences being installed at an incorrect distance from each other and further strengthens the ability to resist impacts from a robotic lawnmower.

According to the invention, each support element comprises two parallel apertures, allowing connecting the robotic lawn mower fence in series with an adjacent, identical robotic lawnmower fence. Each support element may have the shape of a rectangle, with two short sides and two long sides. Each aperture may be a through hole. The aperture can extend through the entire support element along each long side in the longitudinal extension direction thereof. One leg of the bracket of the first fence is inserted through a first aperture of support element and a leg of an adjacent bracket is inserted through the second aperture of the same support element, thereby interconnecting two fences. The support element will thus act as a bridge between two brackets. When the fences have been pressed into the ground, the support elements will define a maximum depression depth.

According to a second aspect, parts or all the above mentioned problems are solved, or at least mitigated, by a fence system that may comprise at least two fences as discussed above. The fence can be intact after pulling up from the ground, leading to a very easy placement and assembly in another desired location. The fence system may also be built in many various shapes to delimit the obstacle to be avoided. The fence system may also comprise a robotic lawnmower, wherein the fence is adapted to temporary delimit the operating area of the robotic lawnmower.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1A is a schematic view of a bracket according to a first embodiment;
Fig. 1B is a schematic view of a bracket according to a second embodiment;
Fig. 2A is a schematic view of a support element according to a first embodiment;
Fig. 2B is a schematic view of a support element according to a second embodiment not covered by the claims;
Fig. 3A is a schematic illustration of an assembly of a robotic lawnmower fence according to a first embodiment;
Fig. 3B is a schematic illustration of an assembly of a robotic lawnmower fence according to a second embodiment not covered by the claims;
Fig. 4 is schematic view of a robotic lawnmower system;
Fig. 5A is a schematic illustration of an installation of a robotic lawnmower fence according to a first embodiment; and
Fig. 5B is a schematic illustration of an installation of a robotic lawnmower fence according to a second embodiment not covered by the claims.

All the figures are schematic, not necessarily to scale, and generally only show parts which are necessary to elucidate the embodiments, wherein other parts may be omitted.

### Detailed description of the exemplary embodiments

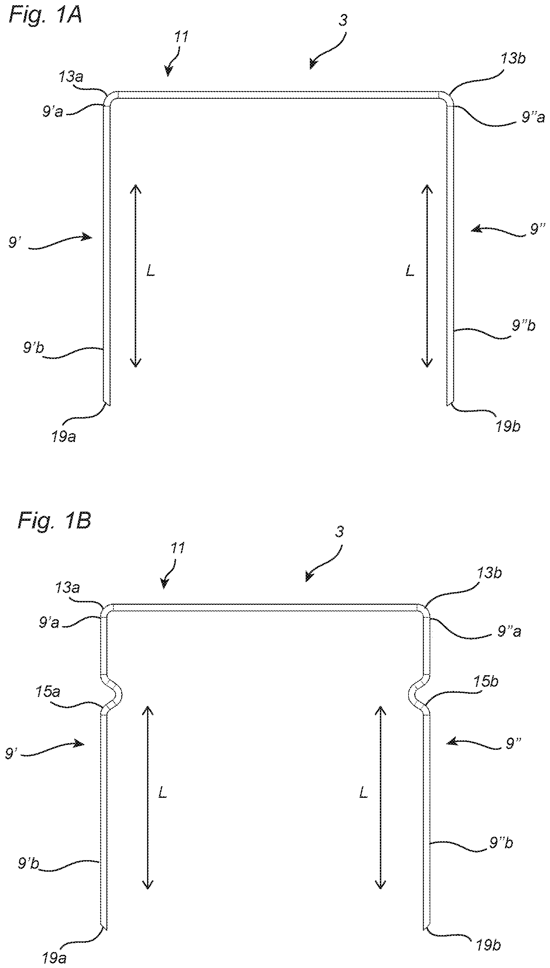

Each of Fig. 1A and 1B illustrates a respective bracket 3 according to a first embodiment (Fig. 1A) and a second embodiment (Fig. 1B), respectively. The bracket 3 is made of a material that can withstand various weather conditions without being significantly affected, for example a metal. The bracket 3 has two legs 9', 9", which are essentially straight and parallel, and a crossbar 11, which extends between upper ends 9'a, 9"a of the two legs 9', 9" and is perpendicular to the legs 9', 9". The crossbar 11 is essentially straight. The shape of the bracket 3 can resemble a U that have been turned upside down. The legs 9', 9" and the crossbar 11 can be formed as separate parts, which are joined to form the U-shape but are preferably made from a single piece of material that is bent to form the U-shape with two legs 9', 9" and a crossbar 11. To create the bracket 3 from a single piece of material, a steel wire may be used. The diameter of the wire must be thin enough to be able to reasonably easy to bend but wide enough to withstand an impact from a robotic lawnmower. A wire diameter of 3 to 9 mm is particularly suitable for meeting these criteria, and a steel wire with a diameter of about 6 mm has been found to be preferred. The surface of the bracket 3 can be treated to withstand various weather conditions better than un untreated surface. The surface of the bracket 3 may be provided with a powder coating in a suitable colour to be perceived as a discrete part of a garden or a lawn installation and protects the bracket 3 from various weather conditions. When the bracket 3 is formed by bending the wire to form a U-shape, two bends 13a, 13b are created. Each bend 13a, 13b is located at a transition between the crossbar 11 and respective upper end 9'a, 9"a of the two legs 9', 9". Each leg 9', 9" of the bracket 3 can also be provided with further bend 15a, 15b, arranged along the longitudinal extension of each leg 9', 9", below the first bend 13a, 13b, as seen in the second embodiment of Fig. 1B.

Each leg 9', 9" of the bracket 3 has a respective free end 9'b, 9"b, which are adapted to be pressed into the ground to a certain depth. To reduce the amount of force that is required to force the free ends 9'b, 9"b into the ground, the free ends 9'b, 9"b may be chamfered to define end tips 19a, 19b. The bevelled angle can, for example, be of at least 45° compared to a straight end edge of the free end.

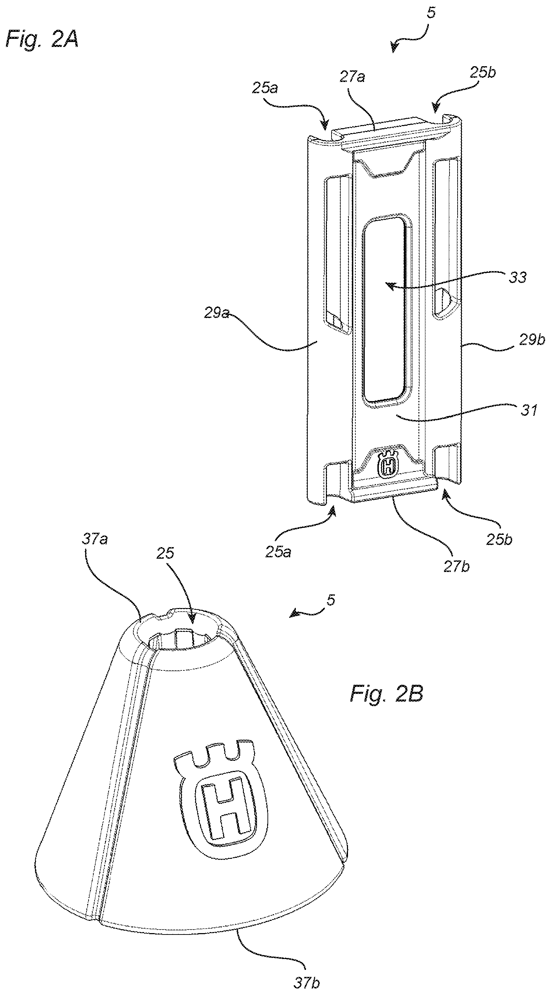

Each of Fig. 2A and 2B illustrates a respective support element 5 according to a first (Fig. 2A) and a second (Fig.2B) embodiment, respectively. The support element 5 according to the second (Fig.2B) embodiment is not covered by the claims. The support element 5 is adapted to be arranged along respective leg 9', 9" of the bracket 3 in the extension direction L thereof to define a maximum depression depth of the legs 9', 9" into the ground.

The support element 5 is made of a plastic. If a thermoplastic material is used, for example polypropylene, the support element 5 can be form as a single piece through injection moulding. The support element 5 comprises at least one aperture 25 and the free end 9'b, 9"b of a leg 9', 9" is adapted to be insert through this aperture 25. When the support element 5 has been connected to the leg 9', 9", it can be moved along the extension direction L of the leg 9', 9". The aperture 25 can extend along the entire support element 5 in its longitudinal extension direction. The size of the aperture 25 may big enough for a leg of the bracket to be inserted though the opening but small enough to provide some friction between the leg 9', 9" and the support element 5 when the support element 5 is moved along an extension direction of the leg 9', 9" between the free ends 9'b, 9"b of the leg 9', 9" and the crossbar 11. The aperture 25 may be a through hole.

The support element 5 can have different shapes. According to the first embodiment, as seen in Fig. 2A, the support element 5 has the shape of a rectangle. The rectangle has two short sides 27a, 27b, two long sides 29a, 29b, a first side face 31 defined by the short and long sides 27a, 27b, 29a, 29b, facing the user when the support element 5 connected to the bracket 3, and a second side face (not shown), also defined by the short and long sides 27a, 27b, 29a, 29b and facing in the opposite direction away from the user, when the support element 5 is connected to the bracket 3 . The first side face 31 and the second side face (not shown) are mirror images of each other, which facilitates the injection moulding and makes it possible to reduce the cost for providing a mould used for the injection moulding. The support element 5 is provided with at least two apertures 25a, 25b. Each aperture 25a, 25b extends through the entire support element 5 along a respective long side 29a, 29b in the longitudinal extension direction thereof. Each aperture 25 may be completely enclosed by walls around the perimeter thereof. The apertures 25 may also partly be enclosed by walls along the perimeter thereof as seen in Fig 2A, to reduce the weight and manufacturing costs of the support element 5. The support element 5 can also be provided with a third aperture 33, which connects the first side face 31 to the second side face (not shown), providing an ergonomic grip when the support element 5 is connected to the bracket 3.

According to a second embodiment, as seen in Fig. 2B, the support element 5 has the shape of a cone. One aperture 25 is centrally arranged through the entire support element 5 in the longitudinal direction thereof. The cone has an upper side 37a and a lower side 37b.

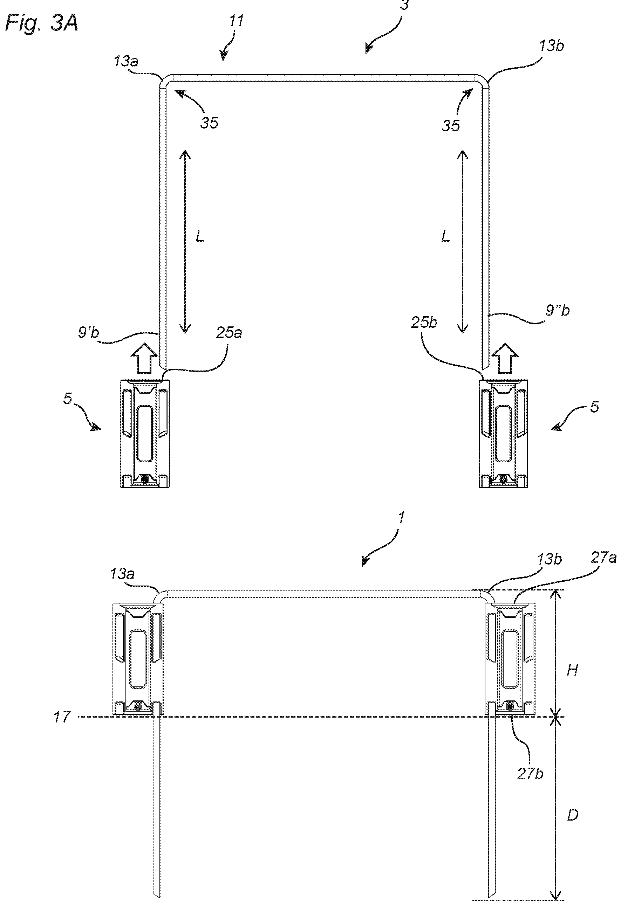

Fig. 3A shows the assembly of a fence 1 according to the first embodiment. The free ends 9'b, 9"b of the legs 9', 9" of the bracket 3 are each inserted though the aperture 25 of a respective support element 5. When the support elements 5 have been attached to the bracket 3, they can be moved along the legs 9', 9" in an extension direction L thereof. The size of the aperture 25 is such that there is a friction between the support elements 5 and respective legs 9', 9" so that the support elements 5 do not slip off the legs 9', 9" due to gravity. To define an upper restriction of the movement of the support element 5 along the leg 9, the bracket 3 is provided with at least one support element stop arrangement 35. The support element stop arrangement 35 can be an integral part of the bracket 3 or an external part attached to the bracket 3. According to the first embodiment, there are two support element stop arrangements 35, defined by the bends 13a, 13b of the bracket 3 located at the transition between the crossbar 11 and respective upper end 9'a, 9"a of the two legs 9', 9". Each support element stop arrangement 35 provides an upper restriction of the movement of the respective support element 5 along the respective leg 9', 9". When the support elements 5a, 5b have been moved along the legs 9', 9" of the bracket 3 until they reach this upper restriction, the upper short side 27a of the support element 5 will rest against the bend 13 between the crossbar 11 and the leg 9. When the fence 1 is pressed into the ground 17, the length of the support elements 5 will define the height H of the fence above the ground, and thereby also the maximum depression depth D of the legs 9', 9" into the ground 17. When the fence 1 has been pressed into the ground 17 to the maximum depression depth D, the lower short side 27b of the support element 5 will rest against the ground 17, while the upper short side 27a of the support element 5 rest against the bend 13 formed at the transition between the crossbar 11 and the leg 9 of the bracket 3.

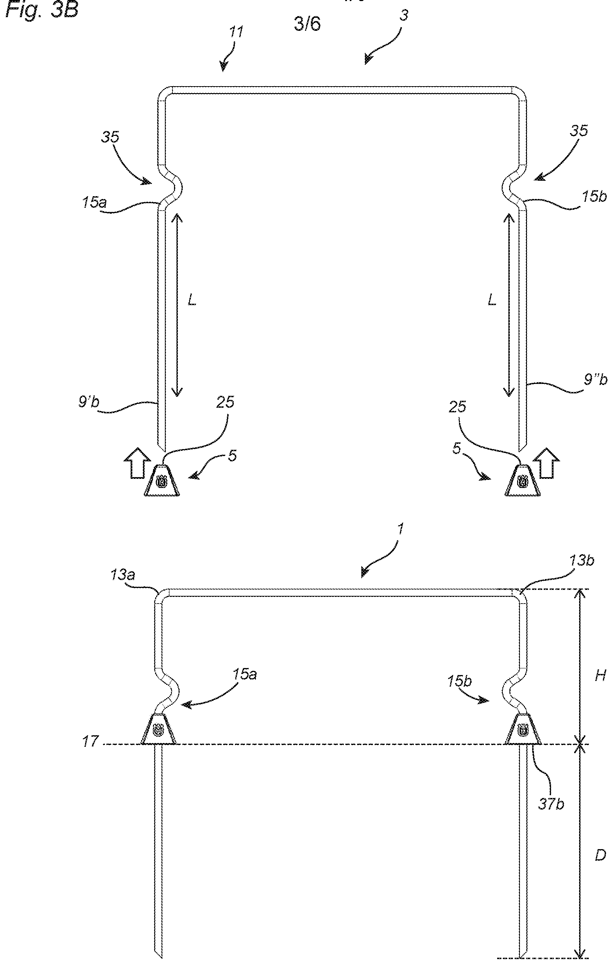

Fig. 3B shows the assembly of a fence 1 according to a second embodiment not covered by the claims. The free ends 9'b, 9"b of the bracket 3 are each inserted though the aperture 25 of a respective support element 5. When the support elements 5 have been attached to the bracket 3, they can be moved along the legs 9', 9" in an extension direction L thereof. The size of the aperture 25 is such that there is a friction between the support elements 5 and respective legs 9', 9" so that the support elements 5 do not slip off the legs 9', 9" due to gravity. To define an upper restriction of the movement of the support element 5 along the leg 9, the bracket 3 is provided with at least one support element stop arrangement 35. The support element stop arrangement 35 can be an integral part of the bracket 3 or an external part attached to the bracket 3. According to the second embodiment, there are two support element stop arrangements 35, configured as bends 15, creating a sinusoidal shape of each of the legs 9', 9" of the bracket 3 that defines an upper restriction of the movement of the support element 5 along each leg 9. This bend 15 is arranged along the extension direction L of each leg 9 at a distance below the respective bend 13a, 13b formed at the transition between the crossbar 11 and each leg 9 of the bracket 3. When the fence 1 is pressed into the ground 17, the length of the support elements 5 will, together with the positions of the support element stop arrangements 35 along the respective legs, define the height H of the fence above the ground 17, as well as the maximum depression depth D of the legs 9', 9" into the ground 17. When the fence 1 has been pressed into the ground 17 to the maximum depression depth D, the lower part 37b of the cone will rest against the ground 17, while the upper part 37a of the cone rests against the bend 15.

The support element can also be designed so that a part of the support element is pushed into the ground and thereby contributes to a steady anchoring if the fence is placed in soft ground.

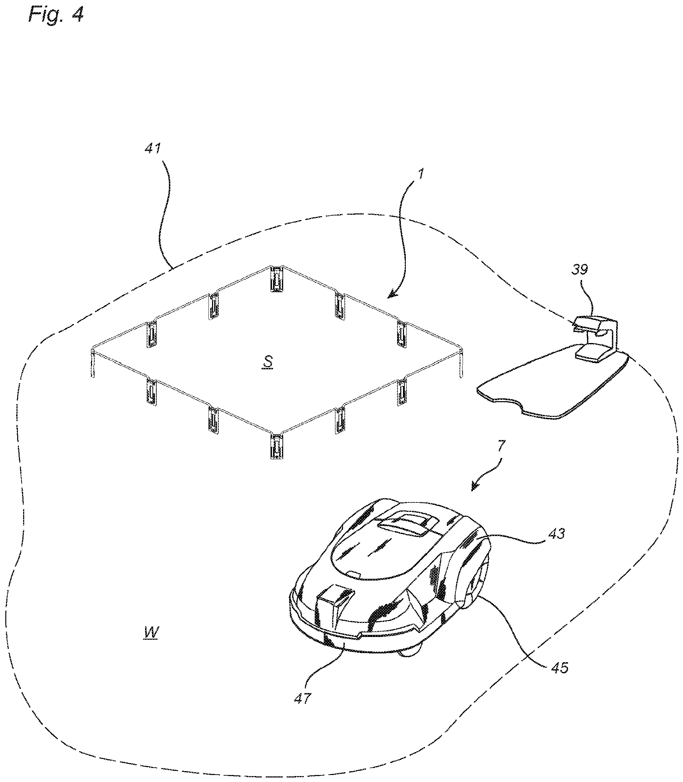

Fig. 4 illustrates a robotic lawnmower system. The system comprises a robotic lawnmower 7, a charging station 39 for the robotic lawnmower 7 and a boundary wire 41 for demarcate of a working area W of the robotic lawnmower 7. The robotic lawnmower 7 comprises a chassis 43 and a body part 45. The chassis 43 is supported by the body part 45 through several connection points (not shown). The body part 45 comprises all essentially parts for operation of the robotic lawnmower 7, such as wheels, cutting equipment, motors, battery etc.

The boundary wire 41 sends a signal that the robotic lawnmower 7 detects when it is close to the boundary wire 41 that makes the robotic lawnmower 7 to turn around not to enter the area outside the boundary wire 41 and keeps the robotic lawnmower 7 within the working area W. Sometimes obstacles may exist within the working area W, such as garden furniture, a trampoline, or bulbous plants, that you want to prevent the robotic lawnmower 7 from running into or might get stuck beneath. A temporary fence makes it possible to block sub-areas S within the existing work area W where the robotic lawnmower 7 not shall operate. This temporary fence can be the physical fence according to the first or second embodiment described above, as illustrated by the fence 1.

This fence 1 is designed so that the robotic lawnmower 7 collides with the fence 1, which is in the right height from ground 17 (Figs 3A, 3B) relative to the free course and the height of the chassis on the robotic lawnmower 1, so that the robotic lawnmower 1 does not get stuck between the ground 17 and the fence 1. Preferably the impact between the fence 1 and the robotic lawnmower 7 takes place between a bumper 47 on the front side of the chassis 43 of the robotic lawnmower 7 and the crossbar 11 of the bracket 3. After the impact, the robotic lawnmower 7 will turn away from the fence 1 and operate another area within the working area W.

When the fence 1 has been pressed straight into the ground to the maximum depression depth, as seen in Figs. 3A and 3B, the crossbar 11 will extend at a height H of between 70 and 170 mm above the ground 17. The height H of the crossbar 11 above ground 17 should preferably be high enough that if a robotic lawnmower 7 that hits the crossbar 11 neither gets stuck between the crossbar 11 and the ground 17, nor stuck on top of the crossbar 11, but instead hits the crossbar 11 with the bumper 47 and turns around in another direction. Since the size of the robotic lawnmower 7 and thus the height of the chassis 43 and the position of the bumper 47 may vary, a height of the crossbar 11 above ground of 70 to 170 mm is typically suitable for most situations. According to the first embodiment Fig. 3A, the height H is dependent on the length of the support elements 5. According to the second embodiment, Fig. 3B, the height H depends on the size of the support element 5 and the location of the bend 15 along the extension direction of the leg 9, below the bend 13 at the translation between the crossbar 11 and the leg 9 of the bracket 3.

The maximum depression depth D, that is defined by the legs 9', 9" of the bracket 3 and the support elements 5a, 5b, may typically be between 80 and 250 mm. The legs 9', 9" of the bracket 3 should preferably be enough rooted into the ground 17 that when the lawnmower 7 runs into the crossbar 11 of the bracket 3, the fence 1 will not be significantly affected. The support elements 5a, 5b help stabilize the bracket 3 if the fence 1 is placed in soft ground since the lower parts 27b, 37b of the support elements 5a, 5b rest against the ground 17 when the fence 1 has been inserted to maximum depression depth D.

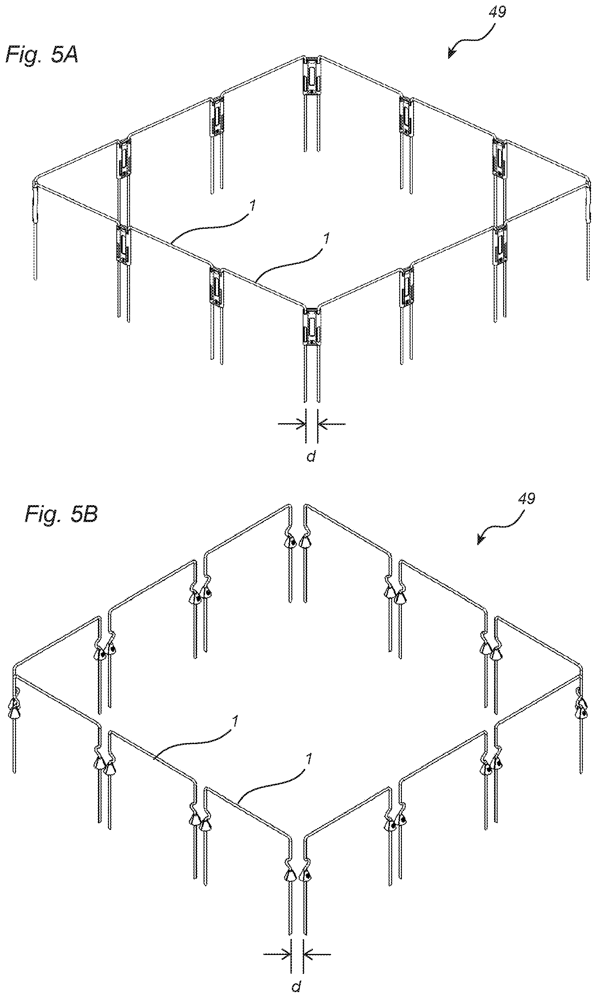

The support element 5 according to the first embodiment, as shown in Fig. 2A is provided with two parallel apertures 25a, 25b. Each aperture 25 extends through the entire support element 5 along each long side 29 in the longitudinal extension direction thereof. A leg 9' of a first bracket 3 can be inserted through the first aperture 25a arranged along the first long side 29a of the support element 5 and a leg 9" of a second bracket 3 can be inserted through the second aperture 25b arranged along the opposite long side 29b of the same support element 5, connecting two identical fences 1 in series. Several fences 1 may be connected to each other creating a fence system 49, as illustrated in Fig. 5A. The fence system 49 may be connected to a closed loop.

Fig 5A shows a fence system 49 according to the first embodiment, comprising of sixteen fences 1. Since two fences 1 are connected to each other through the same support element 5, only a small space d is obtained between two adjacent fences 1; this space d is too small for the robotic lawnmower 7 to get stuck in. By providing an interconnected fence system 49, the ability to resist an impact from the robotic lawnmower 7 will be improved compared to a single stand-alone fence. The entire fence system 49 can be removed from the ground, moved to a new location, and inserted to the ground again as a unit. The fence system 49 can be expanded with an infinite number of fences 1. Different shapes of the fence system 49 may be created to delimit a certain area or an obstacle of arbitrary size and shape within the working area of the robotic lawnmower.

It is also possible to delimit a large area within the working area of the robotic lawnmower with fences 1 according to the second embodiment, as seen in Fig. 5B and which is not covered by the claims. Two adjacent fences 1 are not interconnected with each other but are instead independent units that are arranged close to each other. This arrangement of fences has also a small space d between each fence but does not have the same benefits regarding impact resistance as the fence system according to Fig. 5A.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. A robotic lawnmower fence (1) comprising;
a bracket (3) with two legs (9', 9"), which are essentially straight and parallel, and a crossbar (11), which extends between upper ends (9'a, 9"a) of the two legs (9', 9") and perpendicular to the legs (9', 9"), wherein opposite free ends (9'b, 9"b) of the legs (9', 9") are adapted to be anchored in the ground (17); and
two support elements (5), each adapted to be arranged along a respective leg (9', 9") in the extension direction (L) thereof to define a maximum depression depth (D) of the legs (9', 9") into the ground (17) and wherein each support element (5) comprises two parallel apertures (25a, 25b), wherein the free ends (9'b, 9"b) of the respective legs (9', 9") of the bracket (3) are adapted to be inserted through the apertures (25a, 25b) and wherein the support element (5) can be moved along said extension direction (L) of the legs (9', 9").

2. Robotic lawnmower fence (1) according to claim 1, wherein the crossbar (11) is essentially straight.

3. Robotic lawnmower fence (1) according to any of the preceding claims, wherein each leg (9', 9") of the bracket (3) is provided with at least one support element stop arrangement (35), wherein said support element stop arrangement (35) is adapted to define an upper restriction of a movement of the support element (5) along the leg (9), in particular wherein said support element stop arrangement (35) comprises a bend (13, 15) of the bracket (3).

4. Robotic lawnmower fence (1) according to any of the preceding claims, wherein a length of the support element (5) along the extension direction (L) of the respective legs (9', 9") defines the maximum depression depth (D) of the legs (9', 9") into the ground (17).

5. Robotic lawnmower fence (1) according to any of the proceeding claims, wherein the crossbar (11) is configured to extend at a height (H) above the ground (17), when the fence (1) is inserted straight into the ground (17) to the maximum depression depth (D), of between 70 and 170 mm.

6. Robotic lawnmower fence (1) according to any of the preceding claims, wherein the legs (9', 9") and the support elements (5) define a maximum depression depth (D) of between 80 and 250 mm.

7. Robotic lawnmower fence (1) according to any of the preceding claims, wherein the bracket (3) is of metal, in particular
wherein the bracket (3) is a steel wire with a thickness of between 3 and 9 mm, preferably wherein the surface of the bracket (3) is treated with a powder coating.

8. Robotic lawnmower fence (1) according to any of the preceding claims, wherein the free ends (9'b, 9"b) of the legs (9', 9") are chamfered to define end tips (19a, 19b).

9. Robotic lawnmower fence (1) according to any of the preceding claims, wherein each support element (5) is made of a plastic.

10. Robotic lawnmower fence (1) according to any of the preceding claims, wherein each support element (5) is made in a single piece.

11. Robotic lawnmower fence (1) according any of the preceding claims, wherein the robotic lawnmower fence (1) is connectable to an adjacent, identical robotic lawnmower fence (1).

12. A fence system (49) comprising at least two fences (1) according to any of claims 1-11.

13. Fence system (49) according to claim 12, wherein the system further comprises a robotic lawnmower.

## Patentansprüche

1. Rasenmähroboterzaun (1), umfassend:
eine Halterung (3) mit zwei Schenkeln (9', 9"), die im Wesentlichen gerade und parallel sind, und einer Querstange (11), die sich zwischen oberen Enden (9'a, 9"a) der zwei Schenkel (9', 9") und senkrecht zu den Schenkeln (9', 9") erstreckt, wobei gegenüberliegende freie Enden (9'b, 9"b) der Schenkel (9', 9") angepasst sind, um in dem Boden (17) verankert zu werden; und
zwei Stützelemente (5), die je angepasst sind, um entlang eines jeweiligen Schenkels (9', 9") in der Erstreckungsrichtung (L) davon angeordnet zu werden, um eine maximale Einsenktiefe (D) der Schenkel (9', 9") in den Boden (17) zu definieren, und wobei jedes Stützelement (5) zwei parallele Öffnungen (25a, 25b) umfasst, wobei die freien Enden (9'b, 9"b) der jeweiligen Schenkel (9', 9") der Halterung (3) angepasst sind, um durch die Öffnungen (25a, 25b) eingeführt zu werden, und wobei das Stützelement (5) entlang der Erstreckungsrichtung (L) der Schenkel (9', 9") bewegt werden kann.

2. Rasenmähroboterzaun (1) nach Anspruch 1, wobei die Querstange (11) im Wesentlichen gerade ist.

3. Rasenmähroboterzaun (1) nach einem der vorstehenden Ansprüche, wobei jeder Schenkel (9', 9") der Halterung (3) mit mindestens einer Stützelementanschlaganordnung (35) versehen ist, wobei die Stützelementanschlaganordnung (35) angepasst ist, um eine obere Beschränkung einer Bewegung des Stützelements (5) entlang des Schenkels (9) zu definieren, insbesondere, wobei die Stützelementanschlaganordnung (35) eine Biegung (13, 15) der Halterung (3) umfasst.

4. Rasenmähroboterzaun (1) nach einem der vorstehenden Ansprüche, wobei eine Länge des Stützelements (5) entlang der Erstreckungsrichtung (L) der jeweiligen Schenkel (9', 9") die maximale Einsenktiefe (D) der Schenkel (9', 9") in den Boden (17) definiert.

5. Rasenmähroboterzaun (1) nach einem der vorstehenden Ansprüche, wobei die Querstange (11) konfiguriert ist, um sich auf einer Höhe (H) über dem Boden (17) zu erstrecken, wenn der Zaun (1) gerade in den Boden (17) bis zu der maximalen Einsenktiefe (D), von zwischen 70 und 170 mm, eingeführt ist.

6. Rasenmähroboterzaun (1) nach einem der vorstehenden Ansprüche, wobei die Schenkel (9', 9") und die Stützelemente (5) eine maximale Einsenktiefe (D) von zwischen 80 und 250 mm definieren.

7. Rasenmähroboterzaun (1) nach einem der vorstehenden Ansprüche, wobei die Halterung (3) aus Metall ist, insbesondere, wobei die Halterung (3) ein Stahldraht mit einer Dicke von zwischen 3 und 9 mm ist, vorzugsweise, wobei die Oberfläche der Halterung (3) mit einer Pulverbeschichtung behandelt ist.

8. Rasenmähroboterzaun (1) nach einem der vorstehenden Ansprüche, wobei die freien Enden (9'b, 9"b) der Schenkel (9', 9") angeschrägt sind, um Endspitzen (19a, 19b) zu definieren.

9. Rasenmähroboterzaun (1) nach einem der vorstehenden Ansprüche, wobei jedes Stützelement (5) aus Kunststoff hergestellt ist.

10. Rasenmähroboterzaun (1) nach einem der vorstehenden Ansprüche, wobei jedes Stützelement (5) aus einem einzigen Stück hergestellt ist.

11. Rasenmähroboterzaun (1) nach einem der vorstehenden Ansprüche, wobei der Rasenmähroboterzaun (1) mit einem angrenzenden identischen Rasenmähroboterzaun (1) verbindbar ist.

12. Zaunsystem (49), umfassend mindestens zwei Zäune (1) nach einem der Ansprüche 1 bis 11.

13. Zaunsystem (49) nach Anspruch 12, wobei das System ferner einen Rasenmähroboter umfasst.

## Revendications

1. Clôture de tondeuse à gazon robotisée (1) comprenant ;
un support (3) avec deux pieds (9', 9"), qui sont essentiellement droits et parallèles, et une barre transversale (11), qui s'étend entre des extrémités supérieures (9'a, 9"a) des deux pieds (9', 9") et perpendiculairement aux pieds (9', 9"), dans laquelle des extrémités libres opposées (9'b, 9"b) des pieds (9', 9") sont conçues pour être ancrées dans le sol (17) ; et
deux éléments de support (5), chacun conçu pour être disposé le long d'un pied respectif (9', 9") dans la direction d'extension (L) de celle-ci pour définir une profondeur de dépression maximale (D) des pieds (9', 9") dans le sol (17) et dans laquelle chaque élément de support (5) comprend deux ouvertures parallèles (25a, 25b), dans laquelle les extrémités libres (9'b, 9"b) des pieds respectifs (9', 9") du support (3) sont conçues pour être insérées à travers les ouvertures (25a, 25b) et dans laquelle l'élément de support (5) peut être déplacé le long de ladite direction d'extension (L) des pieds (9', 9").

2. Clôture de tondeuse à gazon robotisée (1) selon la revendication 1, dans laquelle la barre transversale (11) est essentiellement droite.

3. Clôture de tondeuse à gazon robotisée (1) selon l'une quelconque des revendications précédentes, dans laquelle chaque pied (9', 9") du support (3) est pourvu d'au moins un dispositif d'arrêt de l'élément de support (35), dans laquelle ledit dispositif d'arrêt de l'élément de support (35) est conçu pour définir une restriction supérieure d'un mouvement de l'élément de support (5) le long du pied (9), en particulier dans laquelle ledit dispositif d'arrêt de l'élément de support (35) comprend une courbure (13, 15) du support (3).

4. Clôture de tondeuse à gazon robotisée (1) selon l'une quelconque des revendications précédentes, dans laquelle une longueur de l'élément de support (5) le long de la direction d'extension (L) des pieds respectifs (9', 9") définit la profondeur de dépression maximale (D) des pieds (9', 9") dans le sol (17).

5. Clôture de tondeuse à gazon robotisée (1) selon l'une quelconque des revendications précédentes, dans laquelle la barre transversale (11) est conçue pour s'étendre à une hauteur (H) au-dessus du sol (17), lorsque la clôture (1) est insérée directement dans le sol (17) jusqu'à la profondeur de dépression maximale (D), comprise entre 70 et 170 mm.

6. Clôture de tondeuse à gazon robotisée (1) selon l'une quelconque des revendications précédentes, dans laquelle les pieds (9', 9") et les éléments de support (5) définissent une profondeur de dépression maximale (D) comprise entre 80 et 250 mm.

7. Clôture de tondeuse à gazon robotisée (1) selon l'une quelconque des revendications précédentes, dans laquelle le support (3) est en métal, en particulier dans laquelle le support (3) est un fil d'acier d'une épaisseur comprise entre 3 et 9 mm, de préférence dans laquelle la surface du support (3) est traitée avec un revêtement en poudre.

8. Clôture de tondeuse à gazon robotisée (1) selon l'une quelconque des revendications précédentes, dans laquelle les extrémités libres (9'b, 9"b) des pieds (9', 9") sont chanfreinées pour définir des pointes d'extrémité (19a, 19b).

9. Clôture de tondeuse à gazon robotisée (1) selon l'une quelconque des revendications précédentes, dans laquelle chaque élément de support (5) est en plastique.

10. Clôture de tondeuse à gazon robotisée (1) selon l'une quelconque des revendications précédentes, dans laquelle chaque élément de support (5) est réalisé en une seule pièce.

11. Clôture de tondeuse à gazon robotisée (1) selon l'une quelconque des revendications précédentes, dans laquelle la clôture de tondeuse à gazon robotisée (1) peut être connectée à une clôture de tondeuse à gazon robotisée (1) adjacente et identique.

12. Système de clôture (49) comprenant au moins deux clôtures (1) selon l'une quelconque des revendications 1 à 11.

13. Système de clôture (49) selon la revendication 12, dans lequel le système comprend en outre une tondeuse à gazon robotisée.
